# EUROPÄISCHE PATENTSCHRIFT

(11) **EP 0 477 837 B1**
(45) Veröffentlichungstag und Bekanntmachung des Hinweises auf die Patenterteilung: **08.06.1994**
(21) Anmeldenummer: 91116195.8
(22) Anmeldetag: 24.09.1991
(51) Int. Cl.: B66C 1/02, B66F 9/18

(54) **Vakuumheber**
Vacuum hoisting device
Dispositif de levage par vide

(30) Priorität: 26.09.1990 DE 9013525 U
(43) Veröffentlichungstag der Anmeldung: 01.04.1992
(73) Patentinhaber: Bartholomy & Co., D-52355 Düren (DE)
(72) Erfinder: Schmidt, Adolf, W-5160 Düren (DE)
(74) Vertreter: Paul, Dieter-Alfred, Dipl.-Ing.

(56) Entgegenhaltungen:
- DE-A- 1 901 704
- FR-A- 1 410 128
- US-A- 2 999 715

## Beschreibung

Die Erfindung betrifft einen Vakuumheber zum Transport von eine Haftfläche aufweisenden Lasten, mit wenigstens einem Saugkopf, der an seiner Saugseite mehrere vorstehende Ringdichtungen unter Bildung von durch diese umschlossenen Vakuumräumen hat, die an einen Vakuumerzeuger angeschlossen sind, wobei der Vakuumerzeuger mit dem außenliegenden Vakuumraum bzw. den außenliegenden Vakuumräumen über Ventile verbunden ist, die über jeweils die Größe der Haftfläche der Last abtastende Fühler gesteuert sind.

Solche Vakuumheber sind in der Regel für den Krananbau bestimmt, werden aber auch an gabelstaplerähnlichen Flurfördergeräten mit Hubmast, an Balanciergeräten, Manipulatoren, Rollenwender oder dergleichen angebracht. Dabei kommt auch eine Mehrfachanordnung in Frage. Mit ihnen lassen sich u.a. Rollen aus gewickelten Bändern, deren Material beispielsweise Papier, Metall, Kunststoff oder ein Laminat ist, anheben und befördern, und zwar je nach Formgebung des Saugkopfes durch stirnseitiges oder umfangsseitiges An- bzw. Aufsetzen an bzw. auf die liegende oder stehende Rolle. Auch flache Körper, wie beispielsweise Scheiben, lassen sich mit solchen Vakuumhebern umsetzen.

Ein gattungsgemäßer Vakuumheber ist beispielsweise in dem DE-GM 84 35 161.6 beschrieben. Er hat als Saugkopf eine ebene Saugplatte, an deren Unterseite konzentrisch mehrere Ringdichtungen im Abstand zueinander angeordnet sind. Diese Ringdichtungen bilden von diesen jeweils umschlossene, voneinander getrennte Vakuumräume, die beim Aufsetzen der Saugplatte auf die hierfür vorgesehene Haftfläche der für den Transport bestimmten Last abgedichtete Ringkammern bilden, soweit eine Abdeckung durch Last vorhanden ist. Dabei müssen die Ringdichtungen nicht kreisförmig sein, sondern können jede andere Form, z.B. ovale oder eckige Form haben, solange sie nur einen geschlossenen Ring bilden. Es ist auch nicht erforderlich, daß sie ineinandergelegt sind. Sie können auch nebeneinanderliegende Vakuumräume umschließen oder auf mehrere Saugplatten verteilt sein.

Die Vakuumräume sind über Öffnungen in der Saugplatte mit einem Vakuumerzeuger, beispielsweise einer Vakuumpumpe, verbunden. In die Verbindung zum Vakuumerzeuger ist jedem Vakuumraum - zumindest den Vakuumräumen, die außerhalb des innenliegenden Vakuumraums angeordnet sind - ein Ventil zugeordnet. Jedes Ventil ist mit einem Fühler gekoppelt, der die Größe der Haftfläche der Last beim Absenken des Vakuumhebers abtastet. Der Fühler ist jeweils so angeordnet, daß durch ihn das Ventil geöffnet wird, wenn die Haftfläche der Last so groß ist, daß der zugehörige Vakuumraum beim Aufsetzen auf die Haftfläche vollständig geschlossen wird. Auf diese Weise ist gesichert, daß nur die Vakuumräume Verbindung zum Vakuumerzeuger erhalten, die nach dem Aufsetzen des Vakuumhebers auf die Last geschlossene Ringkammern bilden und in die demnach keine Falschluft angesaugt wird.

Als Fühler für die Steuerung der Ventile kommen insbesondere mechanische Taster in Frage, die zunächst über die Ebene der Ringdichtungen nach unten vorstehen und durch die Haftfläche der Last beim Ansaugen hochgedrückt werden. Denkbar sind jedoch auch andere, beispielsweise optisch arbeitende Fühler. Die Taster werden jeweils an der Außenseite der zugehörigen Ringdichtung angeordnet, da auf diese Weise die Sicherheit gegeben ist, daß das zugehörige Ventil nur dann geöffnet wird, wenn die Haftfläche der Last größer ist als die zugehörige Ringkammer bzw. Vakuumraum.

Es kann nun passieren, daß der Durchmesser der Haftfläche der Last exakt so groß ist wie der Außendurchmesser einer der Ringdichtungen, so daß die Haftfläche nicht nach außen über die Ringdichtung vorsteht. Dies hat zur Folge, daß der zugehörige, an der Außenseite dieser Ringdichtung sitzende Fühler nichts erfaßt, also im Fall eines Tasters nicht hochgedrückt wird. Das zugehörige Ventil wird dann nicht geöffnet, was wiederum bewirkt, daß der von dieser Ringdichtung umschlossene Vakuumraum keine Verbindung zum Vakuumerzeuger erhält und deshalb nicht unter Vakuum gesetzt wird. Soweit die zu diesem Vakuumraum innenliegenden Vakuumräume genügend Haltekraft für den Transport der Last entwickeln, ist dies zunächst für den Transport ohne Nachteil.

Probleme entstehen jedoch beim anschließenden Abheben des Vakuumhebers nach Absetzen der Last. Bei diesem Vorgang federn die durch die Vakuumkraft während des Transport elastisch zusammengedrückten Ringdichtungen aus, bleiben also noch für einen kurzen Hubweg in Anlage an der Haftfläche der Last. Die innenliegenden, belüfteten Vakuumräume können dabei Luft nachziehen, nicht jedoch der beim Transport nicht unter Vakuum gesetzte, außenliegende Vakuumraum. Durch die Ausfederbewegung der Ringdichtungen entsteht hier ungewollt eine Vakuumsaugkraft. Ist diese kleiner als das Gewicht der gerade abgesetzten Last, kommt es beim Abheben des Vakuumhebers zu einem schlagartigen Abriß mit der Möglichkeit von Steuerungsfolgefehlern. Ist die Vakuumsaugkraft sogar größer als das Gewicht der abgesetzten Last, wird die Last zunächst mitgenommen. Vor allem die durch das Material der Last nachströmende, nun nicht mehr abgesaugte Luft führt zu einem Zusammenbrechen der Vakuumsaugkraft in diesem Vakuumraum mit der Folge, daß die Last unkontrollierbar abstürzt und beschädigt wird. Es besteht zudem beträchtliche Unfallgefahr.

In der US-PS 3 999 795 ist ein Vakuumheber beschrieben, dessen Vakuumkopf drei Saugplatten aufweist, die jeweils eine Ringdichtung aufweisen. Den drei Saugplatten sind nicht jeweils ein Ventil zugeordnet, sondern ein zentrales Ventil, über das eine Verbindung zur Vakuumpumpe herstellbar ist. Es ist ferner eine Preßlufteinrichtung vorgesehen, der ein Injektor für die Zuführung einer Enteisungsflüssigkeit zugeordnet ist. Durch Umstellung des zentralen Ventils kann in die Vakuumräume periodisch Enteisungsflüssigkeit zugeführt werden, wobei die Preßluft für eine Zerstäubung sorgt.

Ferner ist durch die US-PS 3 865 420̸ ein Vakuumheber offenbart, der einen Vakuumkopf mit einer Vielzahl von Saugnäpfen aufweist, mit denen beispielsweise Eier transportiert werden können. Der Vakuumkopf ist mit einer Vakuumpumpe als Vakuumerzeuger verbunden, wobei der Vakuumkopf wechselweise mit der Saug- oder der Druckseite der Vakuumpumpe verbunden werden kann. Eine solche Anordnung ist jedoch für Vakuumheber der vorliegenden Gattung nicht brauchbar.

Der Erfindung liegt die Aufgabe zugrunde, einen Vakuumheber der eingangs genannten Art so auszubilden, daß unter allen Bedingungen ein schlagartiges Abreißen und insbesondere ein ungewolltes, erneutes Anheben der Last nach deren Absetzen vermieden wird.

Diese Aufgabe wird erfindungsgemäß dadurch gelöst, daß wenigstens einem der Vakuumräume eine Preßlufteinrichtung zugeordnet und eine Steuerungseinrichtung vorgesehen ist, die die Preßlufteinrichtung nach Erfassen der Unterbrechung der Verbindung zum Vakuumerzeuger und nach der Belüftung dieses Vakuumraumes bzw. dieser Vakuumräume für eine bestimmte Zeit zuschaltet, wobei ein Blockierventil zur Unterbrechung der Belüftung vorgesehen ist. Dabei ist das Blockierventil vorzugsweise als Rückschlagventil ausgebildet.

Mit Hilfe der auf diese Weise gesteuerten Preßlufteinrichtung kann in zumindest einem der Vakuumräume ein Überdruck erzeugt werden, der den Vakuumheber zuverlässig von der abgesetzten Last trennt und dabei die Saugkraft überwindet, die sich in dem Vakuumraum bildet, der aus den obengenannten Gründen während des Transportes nicht mit dem Vakuumerzeuger in Verbindung steht. Dabei sollte die Preßlufteinrichtung bevorzugt nur mit dem innenliegenden Vakuumraum verbunden sein, da in diesem Vakuumraum auf jeden Fall ein hinreichender Überdruck erzeugt werden kann.

In weiterer Ausgestaltung der Erfindung ist vorgesehen, daß zur Steuerungsautomatik ein den Druck des zugehörigen Vakuumraumes erfassender Drucksensor gehört, der die Steuerungsautomatik derart beeinflußt, daß die Zuschaltung der Preßlufteinrichtung erst nach einer Druckanhebung in dem zugehörigen Vakuumraum über einen bestimmten Wert, vorzugsweise bis nahe an den Druck der freien Atmosphäre, erfolgt. Dabei kann anstatt des Drucksensors auch ein Zeitglied vorgesehen sein, das die Steuerungsautomatik entsprechend beeinflußt.

Es ist zweckmäßig, daß die Preßlufteinrichtung mit einem Druckluftreservoir versehen ist, damit immer ausreichend Druckluft zur Verfügung steht.

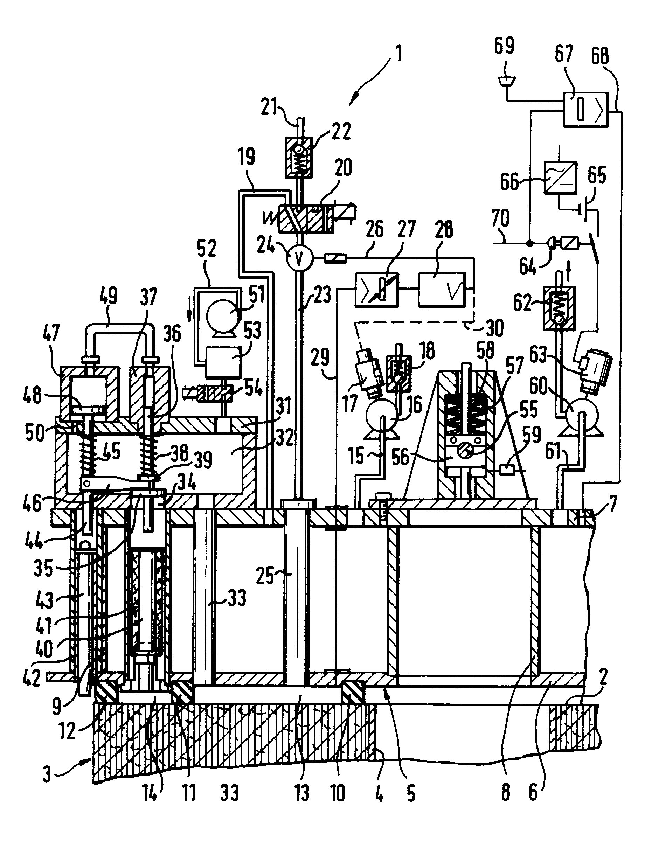

In der Zeichnung ist die Erfindung an Hand eines schematisch im Vertikalschnitt dargestellten Ausführungsbeispiels veranschaulicht. Sie zeigt den linken und mittleren Teil - der rechte Teil ist weggelassen - eines Vakuumhebers (1), der auf der Oberseite (2) einer senkrecht stehenden Papierrolle (3) sitzt, welche innenseitig eine Wickelhülse (4) aufweist. Auf diese Wickelhülse (4) ist die Papierbahn aufgewickelt.

Hauptteil des Vakuumhebers (1) ist ein Vakuumkessel (5), der von oben gesehen kreisrund ausgebildet ist. Er ist als vakuumdichte Schweißkonstruktion ausgeführt und hat als unteren Abschluß einen Saugplatte (6) und obenseitig eine Oberplatte (7). Im mittleren Bereich ist ein Mittelrohr (8) eingesetzt, das den inneren Abschluß des Vakuumkessels (5) bildet. Außenseitig wird der Vakuumkessel (5) von einer umlaufenden Seitenwandung (9) abgeschlossen.

An der Unterseite der Saugplatte (6) sind konzentrisch zur mittleren Vertikalachse des Vakuumhebers (1) drei kreisrunde Ringdichtungen (10̸, 11, 12) aus einem elastomeren Material angebracht. Mit diesen Ringdichtungen (10̸, 11, 12) sitzt der Vakuumheber (1) auf der Oberseite (2) der Papierrolle (3) auf. Die innenliegende Ringdichtung (10̸) hat einen solch großen Durchmesser, daß sie außerhalb der Wickelhülse (4) liegt, so daß über die Wickelhülse (4) keine Falschluft angesaugt werden kann. Mit der weiter außenliegenden, mittleren Ringdichtung (11) bildet die innenliegende Ringdichtung (10̸) einen ringförmigen, innenliegenden Vakuumraum (13). Die außenliegende Ringdichtung (12) bildet mit der mittleren Ringdichtung (11) einen weiteren, ringförmigen und außenliegenden Vakuumraum (14), der von dem innenliegenden Vakuumraum (13) durch die mittlere Ringdichtung (11) getrennt ist. Sofern der Vakuumheber (1) einen größeren Durchmesser hat, können nach außen hin weitere Vakuumräume in entsprechender Weise vorgesehen werden.

Der Vakuumkessel (5) steht über eine Vakuumleitung (15) mit einem Vakuumerzeuger (16) in Verbindung. Der Vakuumerzeuger (16) ist mit einer Drehzahlregeleinrichtung (17) verbunden und hat zudem ein Rückschlagventil (18). Der Vakuumerzeuger (16) hält den als Reservoir dienenden Vakuumkessel (5) ständig auf einem bestimmten Unterdruck.

Von dem Vakuumkessel (5) geht ein Vakuumrohr (19) aus, das zu einem Drei-Wege-Ventil (20̸) führt, das elektromagnetisch betätigbar ist. An das Drei-Wege-Ventil (20̸) ist ein Ausgang (21) - versehen mit einem Rückschlagventil (22) - angeschlossen, mit dem sich eine Verbindung zur freien Atmosphäre herstellen läßt. Ferner ist eine Rohrleitung (23) angeschlossen, in der ein Regelventil (24) angeordnet ist und die in ein Durchgangsrohr (25) mündet. Das Durchgangsrohr (25) durchsetzt den Vakuumkessel (5) und ist zum innenliegenden Vakuumraum (13) hin offen.

Das Regelventil ist mit einer Regelleitung (26) mit einem Meßwertumformer (27) verbunden, der mit einem Meßwertaufnehmer (28) zusammenarbeitet, welcher wiederum über eine den Vakuumkessel (5) durchsetzende Meßleitung (29) Verbindung zum innenliegenden Vakuumraum (13) hat. Eine weitere Steuerleitung (30̸) - gestrichelt dargestellt - ist mit der Drehzahlregeleinrichtung (17) verbunden.

In der gezeigten Stellung des Drei-Wege-Ventils (20̸) hat der Vakuumkessel (5) über das Vakuumrohr (19), das Drei-Wege-Ventil (20̸), die Rohrleitung (23), das Regelventil (24) und das Durchgangsrohr (25) Verbindung zu dem innenliegenden Vakuumraum (13). Er steht also unter vollem Vakuum, wobei das Vakuum mittels des Regelventils (24) auf einen bestimmten Wert eingestellt ist, der über die Meßleitung (29), den Meßwertaufnehmer (28) und den Meßwertumformer (27) erfaßt und an das Regelventil (24) als Regelgröße weitergegeben wird. Eine weitere Beeinflussung des Vakuums geschieht über die Drehzahlregeleinrichtung (17).

Soll das Vakuum im innenliegenden Vakuumraum (13) aufgehoben werden, wird das Drei-Wege-Ventil (20̸) umgeschaltet. Auf diese Weise erhält die Rohrleitung (23), das Durchgangsrohr (25) und damit der innenliegende Vakuumraum (13) über das Rückschlagventil (22) Verbindung zur Atmosphäre, d. h. der innenliegende Vakuumraum (13) wird belüftet. Gleichzeitig wird die vorher bestehende Verbindung zwischen Vakuumleitung (15) und Rohrleitung (23) unterbrochen, d. h. das Vakuum im Vakuumkessel (5) bleibt erhalten.

Im äußeren Bereich ist auf die Oberplatte (7) des Vakuumkessels (5) ein hohler Vakuumblock (31) aufgesetzt. Dessen Innenraum (32) hat über ein den Vakuumkessel (5) durchsetzendes Durchgangsrohr (33) Verbindung zum innenliegenden Vakuumraum (13), d. h. der Innenraum (32) hat immer denselben Druck, wie er im innenliegenden Vakuumraum (13) herrscht.

Der Vakuumblock (31) hat untenseitig eine Ventilöffnung (34), die mit einem Ventilteller (35) zusammenwirkt. Der Ventilteller (35) sitzt auf einer Ventilstange (36), die hohl ausgebildet und an ihrer Unter- und Oberseite offen ist. Die Ventilstange (36) sitzt mit ihrem oberen Ende in einer Ventilstangenführung (37). Eine weitere - hier nicht näher dargestellte - Ventilstangenführung ist im Bereich des unteren Endes der Ventilstange (36) vorgesehen. Die Ventilstange (36) ist im Bereich des Innenraumes (32) von einer druckausübenden Schraubenfeder (38) umgeben, die sich obenseitig an der Ventilstangenführung (37) und untenseitig an einem Bund (39) oberhalb des Ventiltellers (35) abstützt. Der Ventilteller (35) ist somit in Richtung auf die Ventilöffnung (34) druckfederbeaufschlagt.

Die Ventilöffnung (34) setzt sich nach unten hin in einem den Vakuumkessel (5) durchsetzenden Filterrohr (40̸) fort, das in den außenliegenden Vakuumraum (14) mündet. In dem Filterrohr (40̸) ist ein Filtereinsatz (41) angeordnet, durch den von dem außenliegenden Vakuumraum (14) kommende Saugluft strömen kann, wenn der Ventilteller (35) von der Ventilöffnung (34) abgehoben ist.

Außen an der Seitenwandung (9) des Vakuumkessels (5) ist ein Führungsrohr (42) angeordnet, in dem - relativ lose gehalten - ein Taststift (43) vertikal beweglich gelagert ist. Er liegt unmittelbar neben der Außenseite der außenliegenden Ringdichtung (12).

Oberhalb und in axialer Verlängerung des Taststiftes (43) ist eine Betätigungsstange (44) vakuumdicht in der unteren und der oberen Wandung des Vakuumblocks (31) gelagert. Er ist im Bereich des Innenraumes (32) des Vakuumblocks (31) von einer druckausübenden Schraubenfeder (45) umgeben, die die gleiche Federkraft entwickelt wie die Schraubenfeder (38) der Ventilstange (36). Die Schraubenfeder (45) stützt sich an der Oberwandung des Vakuumblocks (31) und untenseitig an einem starr an der Betätigungsstange (44) befestigten Gabelhebel (46) ab. Der Gabelhebel (46) erstreckt sich horizontal bis zur Ventilstange (36) und faßt dort zwischen dem Bund (39) und dem Ventilteller (35) formschlüssig ein. Auf diese Weise macht der Ventilteller (35) die Bewegungen der Betätigungsstange (44) mit.

Die Betätigungsstange (44) ragt nach oben aus dem Vakuumblock (31) in einen Ausgleichszylinder (47) hinein und weist dort endseitig einen in dem Ausgleichszylinder (47) abdichtend laufenden Ausgleichskolben (48) auf, dessen Kolbenfläche derjenigen des Ventiltellers (35) entspricht. Der oberhalb des Ausgleichskolbens (48) befindliche Raum steht über eine Ausgleichsleitung (49) mit der Ventilstangenführung (37) in Verbindung. Der Raum unterhalb des Ausgleichskolbens (48) hat über eine Ausgleichsbohrung (50) Verbindung zu dem Innenraum (32) des Vakuumblocks (31).

Bei größeren Vakuumhebern mit zusätzlichen, außenliegenden Vakuumräumen ist für jeden Vakuumraum eine vorbeschriebene Anordnung vorgesehen, wobei die jeweiligen Vakuumblöcke Verbindung zum jeweils nächsten innenliegenden Vakuumraum haben.

In der gezeigten Darstellung befindet sich der Taststift (43) in seiner untersten Stellung, weil der Durchmesser der Papierrolle (3) gerade eben mit dem Außendurchmesser der außenliegenden Ringdichtung (12) übereinstimmt. Beim Aufsetzen des Vakuumhebers (1) auf die Papierrolle (3) wird somit der Ventilteller (35) nicht hochgehoben. Dabei gleichen sich die auf den Ventilteller (35) in Öffnungsrichtung auf Grund des Vakuums im Innenraum (32) und die über die Ausgleichsbohrung (50) auf die Unterseite des Ausgleichskolbens (48) wirkenden Vakuumkräfte wegen des im wesentlichen übereinstimmenden Durchmessers von Ventilteller (35) und Ausgleichskolben (48) aus, d. h. die Betätigungsstange (44) und damit der Gabelhebel (46) wird mit einer Kraft nach unten gedrückt, die der Kraft entspricht, die auf den Ventilteller (35) in Öffnungsrichtung wirkt. Auf Grund dieses Ausgleichs wird der Ventilteller (35) lediglich durch die Schraubenfedern (38, 45) auf die Ventilöffnung (34) gedrückt.

Im Normalfall stimmt der Durchmesser der Papierrolle (3) nicht - wie dargestellt - exakt mit dem Außendurchmesser der außenliegenden Ringdichtung (12) überein. Ist der Durchmesser größer, wird der Taststift (43) beim Aufsetzen des Vakuumhebers (1) noch nicht betätigt, da er nach unten weniger vorsteht als die Ringdichtungen (10̸, 11, 12), selbst wenn sie durch das Eigengewicht des Vakuumhebers (1) etwas zusammengedrückt werden. Erst wenn das Dreiwege-Ventil (20̸) in die gezeigte Stellung gebracht und damit der Vakuumraum (13) mit dem vollen Vakuum beaufschlagt wird, werden die Ringdichtungen (10̸, 11, 12) derart stark komprimiert, daß der Taststift (43) an der Oberseite der Papierrolle zur Anlage kommt und sogar hochgedrückt wird. Dabei überbrückt er auch den Abstand zwischen seinem oberen Ende und dem unteren Ende der Betätigungsstange (42) und nimmt diese mit.

Über den Gabelhebel (46) wird dann der Ventilteller (35) von der Ventilöffnung (34) gegen die Wirkung der Schraubenfedern (38, 45) abgehoben. Auf diese Weise wird der außenliegende Vakuumraum (14) über das Filterrohr (40̸), die Ventilöffnung (34), den Vakuumblock (31) und das Durchgangsrohr (33) ebenfalls unter Vakuum gesetzt. Mit dem Abheben des Ventiltellers (35) findet an diesem auf der Ober- und Unterseite ein Druckausgleich statt, was ohne weitere Maßnahmen zur Folge hätte, daß die an der Unterseite des Ausgleichskolbens (48) wirkende Vakuumkraft bestrebt wäre, die Betätigungsstange (44) und damit auch die Ventilstange (36) wieder nach unten zu drücken. Da jedoch die Ventilstange (36) hohl ausgebildet und eine Verbindung zum Ausgleichszylinder (47) über die Ausgleichsleitung (49) besteht, wird auch der Raum oberhalb des Ausgleichskolbens (48) unter Vakuum gesetzt, so daß die zunächst bestehende Druckdifferenz aufgehoben wird.

Nach Absetzen der Papierrolle (3) wird - wie schon oben beschrieben - der innenliegende Vakuumraum (13) durch Betätigung des Drei-Wege-Ventils (20̸) belüftet. Diese Belüftung wirkt sich auch auf den Innenraum (32) des Vakuumblocks (31) und damit auf den außenliegenden Vakuumraum (14) aus, da der Ventilteller (35) noch geöffnet ist. Beim Abheben des Vakuumhebers (1) fährt der Taststift (43) wieder aus seinem Führungsrohr (42) heraus und senken sich der Ventilteller (35) und die Betätigungsstange (44) auf Grund der Wirkungen der Schraubenfedern (38) bzw. (45) wieder ab, bis der Ventilteller (35) die Ventilöffnung (34) geschlossen hat.

Die vorbeschriebene Situation setzt voraus, daß die Papierrolle (3) einen größeren als den gezeigten Durchmesser hat, so daß der Taststift (43) beim Aufsetzen angehoben wird. Im vorliegenden Ausführungsbeispiel ist dies nicht der Fall, so daß der Taststift (43) in seiner nach unten herausragenden Stellung verbleibt. Dies hat zur Folge, daß die Ventilöffnung (34) geschlossen bleibt, obwohl der außenliegende Vakuumraum (14) durch die Oberseite (2) der Papierrolle (3) geschlossen ist und unter Vakuum gesetzt werden könnte. Der innenliegende Vakuumraum (13) ist jedoch von seiner Fläche so berechnet, daß in diesen Fällen die von ihm ausgehende Saugkraft ausreicht, um die Papierrolle (3) anzuheben und hängend zu transportieren, so daß es der Vakuumbeaufschlagung des außenliegenden Vakuumraums (14) in solchen Fällen nicht bedarf. Beim Absetzen und anschließenden Anheben des Vakuumhebers (1) entsteht jedoch das Problem, daß durch das Ausfedern der Ringdichtungen (11, 12) in dem außenliegenden Vakuumraum (14) ein Vakuum entsteht, da hier - im Gegensatz zum belüfteten innenliegenden Vakuumraum (13) - keine Luft nachfließen kann. Dies kann dazu führen, daß die Papierrolle (3) beim Anheben des Vakuumhebers (1) eine gewisse Strecke mitgenommen wird, bis das sich im außenliegenden Vakuumraum gebildete Vakuum durch Luft, die durch das Material der Papierrolle (3) langsam nachfließt, so weit aufgehoben ist, daß die Papierrolle (3) nicht mehr getragen wird. Sie stürzt dann unkontrolliert ab.

Um dies zu vermeiden, ist ein Preßlufterzeuger (51) vorgesehen, der über eine Preßluftleitung (52) mit einem Preßluftreservoir (53) und über ein Magnetventil (54) mit dem Innenraum (32) des Vakuumblocks (31) verbunden ist. Normalerweise ist das Magnetventil (54) geschlossen. Nach den Absetzen der Papierrolle (3) und Umschaltung des Drei-Wege-Ventils in die Belüftungsstellung wird das Magnetventil (54) durch eine hier nicht näher dargestellte, automatische Steuerung geöffnet, wenn sich der Druck im Vakuumraum (13) auf nahezu freien Atmosphärendruck erhöht hat. Damit wird der Innenraum (32) des Vakuumblocks (31) und über das Durchgangsrohr (33) der innenliegende Vakuumraum (13) unter Überdruck gesetzt. Ein Abfließen der Luft über die Rohrleitung (23) und das in Belüftungsstellung befindliche Drei-Wege-Ventil (20̸) wird durch das Rückschlagventil (22) verhindert. Der sich in dem innenliegenden Vakuumraum (13) aufbauende Überdruck reicht aus, um den Vakuumheber (1) von der Papierrolle (3) abzuheben und die sich dabei in dem außenliegenden Vakuumraum (14) auf Grund der Ausfederung der Ringdichtungen (11, 12) bildende Vakuumkraft zu überwinden. Es kommt dann nicht mehr zu einer ungewollten Mitnahme der Papierrolle (3). Die Preßluftzufuhr wird sofort gestoppt, nachdem der Vakuumheber (1) abgehoben ist, was durch entsprechende Drucksensoren automatisch gesteuert wird.

Der Vakuumheber (1) ist - was hier nicht näher dargestellt ist - an einem Kranlaufwerk zentrisch aufgehängt. Dessen Unterflasche ist dabei mit einem Tragbolzen (55) verbunden, der über Kulissensteine (56) beweglich in einer Vertikalführung (57) gelagert ist. Untenseitig ist der Tragbolzen (55) verbreitert und stützt sich hierüber nach oben hin an einer Tellerfeder (58) ab. Im unteren Teil der Vertikalführung (57) ist ein Endschalter (59) angeordnet, der betätigt wird, wenn die Kulissensteine (56) ihre untere Endstellung erreichen. Der Endschalter (59) ist über eine hier nicht näher dargestellte Steuerung mit dem Drei-Wege-Ventil (20̸) gekoppelt.

Wenn die Papierrolle (3) abgesetzt wird, wird das Kranlaufwerk schlaff mit der Folge, daß sich die Kulissensteine (56) mit dem Tragbolzen (55) nach unten hin absenken. Mit Betätigen des Endschalters (59) wird das Drei-Wege-Ventil (20̸) aus der gezeigten Stellung, in der der innenliegende Vakuumraum (13) unter Vakuum steht, in die Belüftungsstellung umgeschaltet, so daß automatisch der innenliegende Vakuumraum (13) Verbindung zur Atmosphäre bekommt. Ein weiterer, hier nicht näher dargestellter Endschalter ist mit dem Kranlaufwerk als Schlaffseilsicherung verbunden und schaltet es automatisch ab. Zusätzlich kann der Endschalter (59) auch noch mit dem Magnetventil (54) des Preßlufterzeugers (51) verbunden sein, so daß gleichzeitig der innenliegende Vakuumraum (13) nicht nur belüftet, sondern auch mit Druckluft versorgt wird. Der Vakuumheber (1) kann dann von der Papierrolle (3) abgehoben werden.

Eine Steuerung sorgt dafür, daß, wenn die Kulissensteine (56) den Endschalter (59) verlassen, das Drei-Wege-Ventil (20̸) nicht umgeschaltet wird, vielmehr diese Umschaltung erst nach einem erneuten Absenken des Vakuumhebers (1) auf eine andere Papierrolle und damit ein Absinken der Kulissensteine (56) auf den Endschalter (59) erfolgt. Es kann jedoch auch eine andere Logikschaltung vorgesehen werden bzw. eine Zurückstellung des Drei-Wege-Ventils in die Vakuumstellung nur durch die Bedienungsperson möglich sein.

Der Vakuumheber (1) weist zusätzlich einen Notvakuumerzeuger (60̸) auf, der über eine Notvakuumleitung (61) mit dem Innenraum des Vakuumkessels (5) verbunden ist. Der Notvakuumerzeuger (60̸) ist ebenfalls durch ein Rückschlagventil (62) gesichert. Der Notvakuumerzeuger (60̸) wird von einem Gleichstrommotor (63) angetrieben, der über einen Druckschalter (64) mit einer Batterie (65) verbunden ist. Die Batterie (65) liegt an einem mit der Stromversorgung ständig verbundenen Batterie-Ladegerät (66) an und wird auf diese Weise fortlaufend auf bestem Ladezustand gehalten.

Der Druckschalter (64) ist mit einem Meßwertaufnehmer (67) verbunden, der über eine Meßleitung (68) Verbindung zum Innenraum des Vakuumkessels (5) hat. Der Meßwertumformer (67) ist so eingestellt, daß er dem als Magnetschalter ausgebildeten Druckschalter (64) einen Impuls zum Schließen gibt, wenn über die Meßleitung (68) festgestellt wird, daß das Vakuum im Vakuumkessel (5) einen bestimmten Mindestwert unterschreitet. Dies setzt den Gleichstrommotor (63) und damit den Notvakuumerzeuger (60̸) in Gang, so daß der Abfall des Vakuums im Vakuumkessel (5) wieder kompensiert und das normale Vakuumniveau wieder erreicht wird. Gleichzeitig wird eine Störungsmeldung über einen Signalgeber (69) abgegeben, damit die Bedienungsperson sicher weiß, daß das vom Vakuumerzeuger (16) erzeugte Vakuum für den Transport der Papierrolle (3) nicht ausreichend ist.

Von dem Druckschalter (64) geht noch eine Fernbetätigungsleitung (70̸) aus, über die eine Bedienungsperson den Druckschalter (64) auch unabhängig oder alternativ zu der vorbeschriebenen Automatik betätigen und damit den Notvakuumerzeuger (60̸) in Ganz setzen kann.

Ein Vakuumabfall kann beispielsweise durch Ausfall des Vakuumerzeugers (16) oder auch dadurch entstehen, daß sich die Vakuumgreifeigenschaften einer Papierrolle (3) als Folge ihres zeitabhängigen, viskoelastischen und hygroskopischen Verhaltens so weit verschlechtert haben, daß der Vakuumerzeuger (16) nicht mehr für die Vakuumerzeugung ausreicht. In diesem Fall wirkt der Notvakuumerzeuger (60̸) unterstützend. Zusätzlich kann vorgesehen sein, daß der Notvakuumerzeuger (60̸) auch durch eine Bedienungsperson zugeschaltet wird, wenn dies erforderlich erscheint.

Im übrigen ist unter Vakuum im Sinne dieser Beschreibung ein Druck zu verstehen, der geringer ist als der freie Atmosphärendruck.

## Patentansprüche

1. Vakuumheber (1) zum Transport von eine Haftfläche aufweisenden Lasten (3), mit wenigstens einem Saugkopf (5), der an seiner Saugseite mehrere vorstehende Ringdichtungen (10,11,12) unter Bildung von durch diese umschlossenen Vakuumräumen (13,14) hat, die an einen Vakuumerzeuger (16,60) angeschlossen sind, wobei der Vakuumerzeuger mit dem außenliegenden Vakuumraum (14) bzw. den außenliegenden Vakuumräumen über Ventile (34) verbunden ist, die über jeweils die Größe der Haftfläche der Last abtastende Fühler (43) gesteuert sind,
dadurch gekennzeichnet, daß wenigstens einem der Vakuumräume (13) eine Preßlufteinrichtung (51, 52, 53) zugeordnet und eine Steuerungseinrichtung vorgesehen ist, die die Preßlufteinrichtung (51, 52, 53) nach Erfassung der Unterbrechung der Verbindung zum Vakuumerzeuger (16) und nach der Belüftung dieses Vakuumraumes (13) für eine bestimmte Zeit zuschaltet, wobei ein Blockierventil (22) zur Unterbrechung der Belüftung vorgesehen ist.

2. Vakuumheber nach Anspruch (1),
dadurch gekennzeichnet, daß das Blockierventil als Rückschlagventil (22) ausgebildet ist.

3. Vakuumheber nach Anspruch (1) oder (2),
dadurch gekennzeichnet, daß die Preßlufteinrichtung (51, 52, 53) nur mit dem innenliegenden Vakuumraum (13) verbunden ist.

4. Vakuumheber nach einem der Ansprüche (1) bis (3),
dadurch gekennzeichnet, daß zur Steuerungsautomatik ein den Druck des zugehörigen Vakuumraums (13) erfassender Drucksensor gehört, der die Steuerungsautomatik derart beeinflußt, daß die Zuschaltung der Preßlufteinrichtung (51, 52, 53) erst nach Druckerhöhung in dem zugehörigen Vakuumraum (13) über einen bestimmten Wert erfolgt.

5. Vakuumheber nach einem der Ansprüche (1) bis (3),
dadurch gekennzeichnet, daß zur Steuerungsautomatik ein Zeitglied gehört, daß die Steuerungsautomatik derart beeinflußt, daß die Zuschaltung der Preßlufteinrichtung (51, 52, 53) erst nach einer Druckerhöhung in dem zugehörigen Vakuumraum (13) über einen bestimmten Wert erfolgt.

6. Vakuumheber nach einem der Ansprüche (1) bis (5),
dadurch gekennzeichnet, daß die Preßlufteinrichtung (51) mit einem Druckluftreservoir (53) versehen ist.

## Claims

1. A vacuum lifter (1) for the transport of loads (3) having an adherent surface, with at least one suction head (5) which has a plurality of protruding ring seals (10, 11, 12) on its suction face with the formation of vacuum spaces (13, 14) enclosed by the said ring seals and which are connected to a vacuum generator (16, 60), wherein the vacuum generator is connected to the outer vacuum space (14) or to the outer vacuum spaces via valves (34) which are controlled via sensors (43) which each scan the size of the adherent surface, characterised in that a compressed air device (51, 52, 53) is associated with at least one of the vacuum spaces (13) and a controller is provided which connects the compressed air device (51, 52, 53) for a certain time after detecting the interruption of the connection to the vacuum generator (16) and after the aeration of the said vacuum space (13), wherein a stop valve (22) is provided for interrupting the aeration.

2. A vacuum lifter according to claim 1, characterised in that the stop valve (22) is constructed as a non-return valve.

3. A vacuum lifter according to claim 1 or 2, characterised in that the compressed air device (51, 52, 53) is only connected to the inner vacuum space (13).

4. A vacuum lifter according to any one of claims 1 to 3, characterised in that a pressure sensor which detects the pressure of the associated vacuum space (13) forms part of the automatic control system, which pressure sensor influences the automatic control system in such a way that the compressed air device (51, 52, 53) is not connected until the pressure in the associated vacuum space (13) increases above a given value.

5. A vacuum lifter according to any one of claims 1 to 3, characterised in that a time function element forms part of the automatic control system and influences the automatic control system in such a way that the compressed air device (51, 52, 53) is not connected until the pressure in the associated vacuum space (13) increases above a given value.

6. A vacuum lifter according to any one of claims 1 to 5, characterised in that the compressed air device (51) is provided with a compressed air reservoir (53).

## Revendications

1. Elévateur (1) à dépression destiné au transport de charges (3) présentant une surface d'adhérence, comportant au moins une tête aspirante (5) munie, sur son côté aspiration, de plusieurs garnitures annulaires d'étanchement (10, 11, 12) saillantes, en formant des chambres de dépression (13, 14) qui sont ceinturées par lesdites garnitures et sont raccordées à un générateur de dépression (16, 60), le générateur de dépression étant respectivement relié à la chambre de dépression (14) occupant une position extérieure, ou aux chambres de dépression occupant des positions extérieures, par l'intermédiaire de soupapes (34) commandées au moyen de palpeurs (43) explorant respectivement la dimension de la surface d'adhérence de la charge,
caractérisé par le fait qu'un dispositif (51, 52, 53) à air comprimé est affecté à au moins l'une (13) des chambres de dépression, et il est prévu un dispositif de commande qui met en fonction, pour un temps déterminé, le dispositif (51, 52, 53) à air comprimé après détection de l'interruption de la liaison avec le générateur de dépression (16), et après l'aérage de cette chambre de dépression (13), une soupape de blocage (22) étant prévue pour interrompre l'aérage.

2. Elévateur à dépression selon la revendication 1,
caractérisé par le fait que la soupape de blocage est réalisée sous la forme d'un clapet antiretour (22).

3. Elévateur à dépression selon la revendication 1 ou 2,
caractérisé par le fait que le dispositif (51, 52, 53) à air comprimé est relié uniquement à la chambre de dépression (13) occupant une position intérieure.

4. Elévateur à dépression selon l'une des revendications 1 à 3,
caractérisé par le fait qu'un capteur de pression, faisant partie du système de commande automatique et détectant la pression de la chambre de dépression (13) associée, influence le système de commande automatique de manière telle que la mise en fonction du dispositif (51, 52, 53) à air comprimé s'effectue uniquement après accroissement de la pression, dans la chambre de dépression (13) associée, au-delà d'une valeur déterminée.

5. Elévateur à dépression selon l'une des revendications 1 à 3,
caractérisé par le fait qu'un organe de temporisation, faisant partie du système de commande automatique, influence le système de commande automatique de manière telle que la mise en fonction du dispositif (51, 52, 53) à air comprimé s'effectue uniquement après un accroissement de la pression, dans la chambre de dépression (13) associée, au-delà d'une valeur déterminée.

6. Elévateur à dépression selon l'une des revendications 1 à 5,
caractérisé par le fait que le dispositif (51) à air comprimé est muni d'un réservoir (53) à air comprimé.
